# FASCICULE DE BREVET EUROPEEN

(11) **EP 1 427 955 B1**
(45) Date de publication et mention de la délivrance du brevet: **28.05.2008**
(21) Numéro de dépôt: 02779636.6
(22) Date de dépôt: 16.09.2002
(51) Int. Cl.: F16K 1/22

(54) **VANNE PAPILLON**
VENTILKLAPPE
BUTTERFLY VALVE

(30) Priorité: 17.09.2001 FR 0112008
(43) Date de publication de la demande: 16.06.2004
(73) Titulaire: Defontaine, 85530 La Bruffière (FR)
(72) Inventeur: MARAUD, Bruno, F-44115 Basse Goulaine (FR); BONNEFOUS, Jean, F-44400 Rezé (FR)
(74) Mandataire: Rémont, Claude
(86) Numéro de dépôt international: PCT/FR2002/003150
(87) Numéro de publication internationale: WO 2003/025440

(56) Documents cités:
- GB-A- 1 212 863
- US-A- 3 770 242
- US-A- 3 945 398
- US-A- 4 194 722

## Description

La présente invention concerne une vanne papillon selon le preambule de la revendication 1. Une telle vanne est connue for exemple de US-A-3 770 242.

Dans l'industrie agro-alimentaire, la propreté des canalisations à l'intérieur desquelles circulent les liquides alimentaires (lait, crèmes...) est d'une grande importance.

Or, petit à petit, des impuretés se déposent le long des canalisations, notamment au niveau des vannes. Il est donc nécessaire de nettoyer correctement ces canalisations afin d'empêcher l'apparition de bactéries, ce nettoyage se faisant sans démontage de la canalisation, par la mise en circulation d'un liquide nettoyant qui ne doit pas être trop agressif, comme l'eau de javel, pour ne pas détériorer les joints et les parois en acier inoxydable.

Il est connu que les vannes papillons sont des vannes de conception simple et peu onéreuse. Cependant, elles ont l'inconvénient d'être difficilement nettoyables, surtout au niveau de la jonction du volet au corps de la vanne, à proximité de l'axe de rotation.

A cause de cet inconvénient, afin d'être sûr de l'efficacité des opérations de nettoyage des vannes papillon en place, la durée de circulation du fluide de nettoyage doit être considérablement augmentée, et certains utilisateurs préfèrent même ne pas utiliser de telles vannes et les remplacer par des vannes à clapet.

Le problème posé est de réaliser un dispositif permettant d'augmenter l'efficacité et la qualité du nettoyage des vannes papillons en place par circulation de fluide, afin, d'une part, de respecter les normes de sécurité et d'hygiène, et, d'autre part, de diminuer le temps de ces opérations de nettoyages et donc leur coût.

La solution proposée est une vanne papillon comportant un volet monté en rotation autour d'un axe de rotation et comprenant au moins une excroissance située sur au moins une de ses faces et conformée de façon à dévier le fluide vers les zones de fonction du volet et du corps de manière à générer des courants tourbillonnaires forts et reguliers circulant, à proximité et en aval de ces zones.

De façon tout à fait inattendue et surprenante, l'utilisation d'un tel volet permet en effet d'améliorer considérablement la qualité du nettoyage de la vanne et de réduire le temps des opérations de nettoyage, alors que l'homme du métier était détourné d'une telle solution qui augmente la perte de charge du circuit et qui va à l'encontre de ce que recherche toujours un hydraulicien dont l'objectif est de rechercher un circuit avec le moins de perte de charge possible.

En effet, un volet, même en position ouvert, est un obstacle au bon écoulement du fluide : il se créé par conséquent à proximité de celui-ci des tourbillons et des phénomènes de cavitation, principalement au niveau de la jonction du volet au corps de la vanne proche de l'axe de rotation.

La qualité du nettoyage dépend de trois facteurs principaux : un facteur thermique, un facteur chimique (réaction chimique des composants du fluide de nettoyage avec les zones à nettoyer) et un facteur physique (frottement du fluide de nettoyage sur les zones à nettoyer).

La présence des tourbillons et des phénomènes de cavitation créent des zones locales de dépression, principalement en aval de l'axe de rotation à la jonction du corps et du volet, ce qui ralentit l'écoulement du fluide dans ces zones.

Ainsi, l'action physique du fluide de nettoyage se trouve considérablement réduite dans ces zones de dépression. Il en résulte qu'au fur et à mesure des phases de production et de nettoyage, les parois de la conduite située dans ces zones finissent par s'encrasser, ce qui favorise la formation de bactéries.

Contrairement aux principes de rhéologie selon lesquels il est primordial de minimiser les pertes de charge dans une conduite, la solution proposée consiste à incorporer au volet une excroissance ce qui augmente la perte de charge de la vanne.

Cependant, du fait de cette excroissance et des modes préférentiels de réalisation de sa position et de sa forme, l'écoulement et la trajectoire du fluide, ainsi que les tourbillons, se trouvent modifiés en aval de l'axe de rotation. Ainsi les zones à la jonction du volet et du corps, qui sont propices à l'encrassage, ne sont plus soumises à des courants trop faibles, mais à des courants plus forts et réguliers grâce auxquels ces zones sont beaucoup plus facilement nettoyées. Il est donc possible de réduire le temps des opérations de nettoyage des vannes.

D'autres particularités de l'invention résulteront de la description qui va suivre.

Aux dessins annexés donnés à titre d'exemples non limitatifs,
- la figure 1 est une vue en perspective d'une vanne papillon ;
- la figure 2 est une vue en perspective d'un premier mode de réalisation d'un volet de vanne papillon selon la présente invention ; et
- la figure 3 est une vue en perspective d'un second mode de réalisation d'un volet de vanne papillon selon la présente invention.

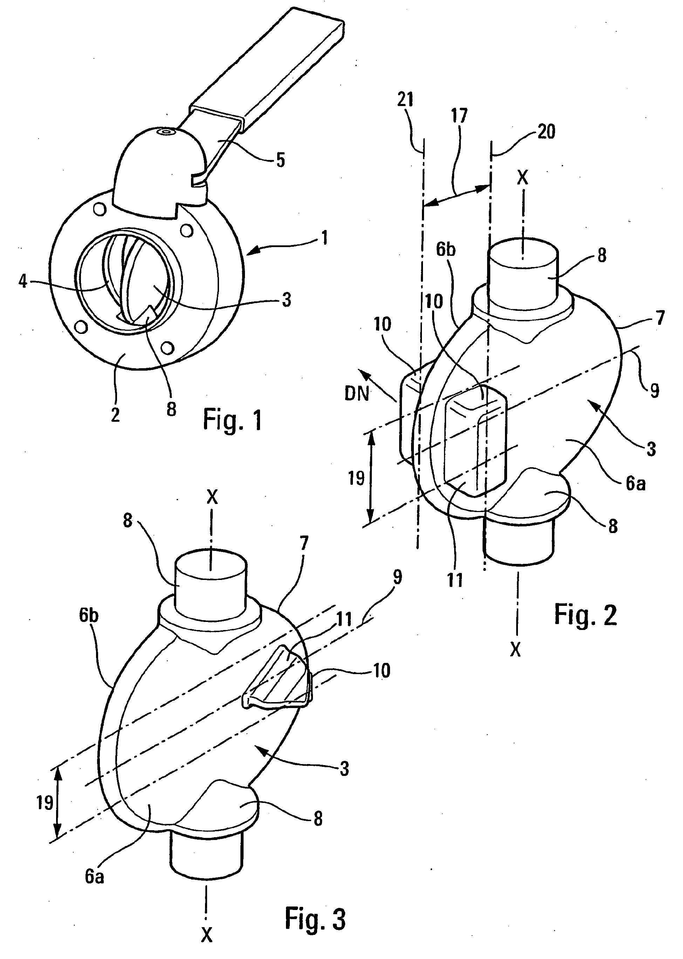

Comme on peut le voir à la figure 1, une vanne papillon 1 possède un corps 2 à l'intérieur duquel circule un fluide, un volet 3 sensiblement plat, rotatif autour d'un axe de rotation X-X, et dont la rotation permet de contrôler la circulation du fluide, un joint 4 apte à assurer l'étanchéité de part et d'autre du volet 3 quand celui-ci est en position fermé, et un organe de manoeuvre 5 permettant à l'utilisateur de commander l'ouverture du volet 3 dans le corps 2.

Le volet 3 est limité, d'une part par ses deux faces 6a, 6b, et, d'autre part, par sa périphérie 7 qui correspond sensiblement à la section de passage du fluide dans le corps 2.

L'intersection de l'axe de rotation X-X du volet 3 avec la périphérie 7 du volet 3 définit deux demi-arbres 8 par lesquels le volet 3 est solidarisé au corps 2 avec possibilité de rotation. L'axe qui est perpendiculaire à l'axe de rotation X-X, situé dans le plan du volet 3, et à mi-chemin des deux demi-arbres 8 est ci-après dénommé axe équatorial 9.

Selon l'invention, le volet 3, comprend au moins une excroissance 10 sur au moins une des deux faces 6a, 6b du volet 3 : dans l'exemple illustré à la figure 2, les deux faces 6a, 6b comportent une excroissance 10, alors que dans celui illustré par la figure 3, une face seulement comporte une excroissance 10.

Dans les exemples illustrés par les figures 2 et 3, les excroissances 10 sont situées à proximité de la périphérie 7 du volet 3. Plus précisément, dans ces exemples, les excroissances 10 sont situées à proximité de l'axe équatorial 9 et de la périphérie 7 du volet 3.

La présence de ces excroissances 10 permet de modifier la rhéologie du fluide, notamment à proximité des deux demi-arbres 8.

Le positionnement des excroissances 10 à proximité de l'axe équatorial 9 permet de dévier le fluide vers les deux demi-arbres 8 d'une façon particulièrement efficace en augmentant la vitesse de circulation du fluide dans les zones des parois situées en aval des demi-arbres 8 et en éloignant les tourbillons l'axe équatorial 9. On améliore ainsi la qualité du nettoyage par une meilleure action physique du fluide.

Selon un mode particulier, on peut placer l'excroissance 10 en aval de l'axe de rotation X-X du volet 3 quand celui-ci est en position ouvert.

Ce mode de réalisation est particulièrement intéressant, surtout quand l'excroissance 10 est située à proximité de l'axe équatorial 9 et de la périphérie 7 du volet 3 car les tourbillons causés par le volet 3 et l'excroissance 10 se trouvent en aval de l'excroissance 10, et donc en aval de toute partie du volet 3 et de la vanne 1, à l'intérieur de la conduite.

Ainsi, non seulement la zone à proximité des deux demi-arbres 8 mais aussi l'ensemble du volet 3, n'est plus baignée par des tourbillons à faible vitesse d'écoulement, ce qui facilite le nettoyage. Les tourbillons générés par l'excroissance 10 sont situés bien en aval de la vanne 1 où se trouvent les dépôts à enlever.

Pour être particulièrement efficace, l'excroissance 10 doit avoir une dimension minimale dans la direction normale DN aux faces 6a, 6b du volet 3. Cette dimension, ci-après dénommée hauteur, doit être suffisante pour dévier l'écoulement du fluide vers les zones des parois de la conduite situées en aval des deux demi-arbres 8. Elle peut être facilement déterminée par l'homme du métier. Par exemple, pour de l'eau circulant à un débit de 50m³/h dans une conduite d'un diamètre de 50mm, la hauteur doit être de 18mm au moins.

Dans l'exemple illustré à la figure 2, l'excroissance 10 à la forme générale d'un parallélépipède, la base de l'excroissance 10 étant de forme rectangulaire, tandis que dans celui illustré par la figure 3, l'excroissance 10 à la forme générale d'une pyramide tronquée, la base de l'excroissance 10 étant de forme triangulaire dont un angle est orienté vers le centre du volet 3.

La surface latérale 11 de l'excroissance 10 forme, avec la face 6a,6b du volet 3 qui la supporte, un angle au moins égal à 45°. De cette façon, la rupture de pente entre l'excroissance et la face du volet génère un effet tourbillonnaire important. La surface latérale 11 de l'excroissance 10 illustré à la figure 2 forme un angle sensiblement égal à 90° avec la face 6a,6b qui la supporte, et celle de l'excroissance 10 illustré à la figure 3 forme un angle sensiblement égal à 60°.

De façon plus précise, l'excroissance 10 est de préférence située dans une bande équatoriale 19 parallèle à l'axe équatorial 9 centrée par rapport à cet axe équatorial 9 et dont la largeur est sensiblement égale au tiers du diamètre du volet 3.

L'excroissance 10 est de préférence située dans la zone périphérique 17 qui correspond à la zone limitée, d'une part, par la normale 21 à l'axe équatorial 9 qui est tangente à la périphérie 7 du volet 3 et d'autre part, par la médiane 20 située entre la normale 21 et l'axe de rotation X-X.

De même, afin d'avoir un bon effet tourbillonnaire en aval de l'axe de rotation X-X, sur les parois de la canalisation situées dans l'alignement des demi-arbres 8, la hauteur de l'excroissance 10 doit être de préférence au moins égale au quart, voire au tiers, du diamètre du volet 3 (qui correspond au diamètre de la canalisation).

Un tel volet est ainsi particulièrement bien adapté à créer un écoulement tourbillonnaire important en aval de l'axe de rotation X-X et donc à nettoyer la canalisation, même dans l'alignement des demi-arbres 8 du volet 3, en aval de ceux-ci

Bien évidemment, l'invention n'est pas limitée aux modes de réalisations décrits ci-dessus.

Il est possible d'utiliser un volet 3 dont la forme des excroissances 10 est différente de celles illustrées par les figures 2 et 3, ou un volet 3 ayant plusieurs excroissances 10 sur chaque face 6a, 6b.

## Revendications

1. Vanne papillon (1) comportant un corps (2), un volet (3) qui est monté en rotation autour d'un axe (X-X) par rapport au corps (2) et qui comprend au moins une excroissance (10) sur au moins une de ses faces (6a, 6b), et un organe de manoeuvre (5) permettant de .commander l'ouverture du volet (3), **caractérisée en ce que** l'excroissance (10) est conformée de façon à dévier le fluide vers les zones de jonction du volet (3) et du corps (2) de manière à générer des courants tourbillonnaires forts et réguliers circulant à proximité et en aval de ces zones.

2. Vanne papillon (1) selon la revendication 1, **caractérisée en ce que** l'excroissance (10) est située en aval de l'axe de rotation (X-X) du volet (3) quand celui-ci est en position ouverte.

3. Vanne papillon (1) selon la revendication 1 ou 2, **caractérisée en ce que** l'excroissance (10) est située à proximité de l'axe équatorial (9) du volet (3) qui est perpendiculaire à l'axe de rotation (X-X) et est à mi-chemin des deux demi-arbres (8) par lesquels le volet (3) est solidarisé au corps (2) de la vanne (1)

4. Vanne papillon (1) selon la revendication 3, **caractérisée en ce que** l'excroissance (10) est située dans une bande équatoriale (19) qui est parallèle à l'axe équatorial (9), centrée par rapport à cet axe (9) et dont la largeur est sensiblement égale au tiers du diamètre du volet (3).

5. Vanne papillon (1) selon l'une des revendications 1 à 4, **caractérisée en ce que** l'excroissance (10) est située à proximité de la périphérie (7) du volet (3).

6. Vanne papillon (1) selon la revendication 5 dépendante de la revendication 3 ou 4, **caractérisée en ce que** l'excroissance (10) est située dans la zone périphérique (17) délimitée, d'une part, par la normale (21) à l'axe équatorial (9) tangente à la périphérie (7) du volet (3), et, d'autre part, par la médiane (20) située entre la normale (21) et l'axe de rotation (X-X).

7. Vanne papillon (1) selon l'une des revendications 1 à 6, **caractérisée en ce que** la hauteur de l'excroissance (10) est au moins égale au quart du diamètre du volet (3).

8. Vanne papillon (1) selon l'une des revendications 1 à 7, **caractérisée en ce que** la surface latérale (11) de l'excroissance (10) forme, avec la face (6a,6b) du volet (3) qui la supporte, un angle au moins égal à 45° .

9. Vanne papillon (1) selon l'une des revendications 1 à 8, **caractérisée en ce que** la base de l'excroissance (10) est de forme rectangulaire.

10. Vanne papillon (1) selon l'une des revendications 1 à 8, **caractérisée en ce que** la base de l'excroissance (10) est de forme triangulaire.

## Claims

1. Butterfly valve (1) comprising a body (2), a flap (3) that is mounted for rotation about an axis (X-X) with respect to the body (2) and that comprises at least one protrusion (10) on at least one of its faces (6a, 6b), and a manoeuvring member (5) for controlling the opening of the flap (3), **characterised in that** the protrusion (10) is conformed so as to divert the fluid to the junction zones of the flap (3) and body (2) so as to generate strong regular turbulent currents flowing close to and downstream of these zones.

2. Butterfly valve (1) according to claim 1, **characterised in that** the protrusion (10) is situated downstream of the rotation axis (X-X) of the flap (3) when the latter is in the open position.

3. Butterfly valve (1) according to claim 1 or 2, **characterised in that** the protrusion (10) is situated close to the equatorial axis (9) of the flap (3), which is perpendicular to the rotation axis (X-X) and is halfway between the two half-shafts (8) by means of which the flap (3) is fixed to the body (2) of the valve (1).

4. Butterfly valve (1) according to claim 3, **characterised in that** the protrusion (10) is situated in an equatorial band (19) that is parallel to the equatorial axis (9), centred with respect to this axis (9), and the width of which is substantially equal to one third of the diameter of the flap (3).

5. Butterfly valve (1) according to one of claims 1 to 4, **characterised in that** the protrusion (10) is situated close to the periphery (7) of the flap (3).

6. Butterfly valve (1) according to claim 5 dependent on claim 3 or 4, **characterised in that** the protrusion (10) is situated in the peripheral zone (17) delimited firstly by the normal (21) to the equatorial axis (9) tangent to the periphery (7) of the flap (3) and secondly by the median line (20) situated between the normal (21) and the rotation axis (X-X) .

7. Butterfly valve (1) according to one of claims 1 to 6, **characterised in that** the height of the protrusion (10) is at least equal to one quarter of the diameter of the flap (3).

8. Butterfly valve (1) according to one of claims 1 to 7, **characterised in that** the lateral surface (11) of the protrusion (10) forms, with the face (6a, 6b) of the flap (3) that supports it, an angle of at least 45°.

9. Butterfly valve (1) according to one of claims 1 to 8, **characterised in that** the base of the protrusion (10) is rectangular in shape.

10. Butterfly valve (1) according to one of claims 1 to 8, **characterised in that** that base of the protrusion (10) is triangular in shape.

## Patentansprüche

1. Absperrklappe (1) mit einem Ventilkörper (2), einer Scheibe (3), die bezüglich des Ventilkörpers (2) um eine Achse (X-X) drehbar gelagert ist und an zumindest einer ihrer Seiten (6a, 6b) mindestens einen Vorsprung (10) aufweist, und mit einem Betätigungsglied (5), mit dem das Öffnen der Scheibe (3) gesteuert werden kann, **dadurch gekennzeichnet, dass** der Vorsprung (10) so angeformt ist, dass er das Medium zu den Verbindungsbereichen von Scheibe (3) und Ventilkörper (2) hin umlenkt, so dass gleichmäßig starke Wirbelströmungen entstehen, die in der Nähe dieser Bereiche und stromabwärts von diesen fließen.

2. Absperrklappe (1) nach Anspruch 1, **dadurch gekennzeichnet, dass** der Vorsprung (10) stromabwärts der Drehachse (X-X) der Scheibe (3) liegt, wenn diese in Offenstellung ist.

3. Absperrklappe (1) nach Anspruch 1 oder 2, **dadurch gekennzeichnet, dass** der Vorsprung (10) in der Nähe der Äquatorialachse (9) der Scheibe (3) liegt, die senkrecht zur Drehachse (X-X) verläuft und auf halbem Weg der beiden Halbwellen (8) liegt, über welche die Scheibe (3) fest mit dem Ventilkörper (2) der Klappe (1) verbunden ist.

4. Absperrklappe (1) nach Anspruch 3, **dadurch gekennzeichnet, dass** der Vorsprung (10) in einem Äquatorialstreifen (19) liegt, der parallel zur Äquatorialachse (9) verläuft, und bezüglich dieser Achse (9) zentriert ist und dessen Breite im wesentlichen gleich einem Drittel des Durchmessers der Scheibe (3) ist.

5. Absperrklappe (1) nach einem der Ansprüche 1 bis 4, **dadurch gekennzeichnet, dass** der Vorsprung (10) in der Nähe des Umfangs (7) der Scheibe (3) liegt.

6. Absperrklappe (1) nach Anspruch 5 in Abhängigkeit von Anspruch 3 oder 4, **dadurch gekennzeichnet, dass** der Vorsprung (10) in dem Umfangsbereich (17) liegt, der einerseits von der Normalen (21) zur Äquatorialachse (9), den Umfang (7) der Scheibe (3) tangierend, und andererseits von der Mittellinie (20) zwischen der Normalen (21) und der Drehachse (X-X) begrenzt wird.

7. Absperrklappe (1) nach einem der Ansprüche 1 bis 6, **dadurch gekennzeichnet, dass** die Höhe des Vorsprungs (10) zumindest gleich einem Viertel des Durchmessers der Scheibe (3) ist.

8. Absperrklappe (1) nach einem der Ansprüche 1 bis 7, **dadurch gekennzeichnet, dass** die Seitenfläche (11) des Vorsprungs (10) mit der diesen tragenden Seite (6a, 6b) der Scheibe (3) einen Winkel von mindestens gleich 45° einschließt.

9. Absperrklappe (1) nach einem der Ansprüche 1 bis 8, **dadurch gekennzeichnet, dass** die Grundfläche des Vorsprungs (10) rechteckförmig ist.

10. Absperrklappe (1) nach einem der Ansprüche 1 bis 8, **dadurch gekennzeichnet, dass** die Grundfläche des Vorsprungs (10) dreieckförmig ist.
